# EUROPÄISCHE PATENTSCHRIFT

(11) **EP 3 890 916 B1**
(45) Veröffentlichungstag und Bekanntmachung des Hinweises auf die Patenterteilung: **25.06.2025**
(21) Anmeldenummer: 19817919.4
(22) Anmeldetag: 26.11.2019
(51) Int. Cl.: B23K 26/03, B23K 26/34

(54) **GEREGELTES PULVERAUFTRAGSSCHWEISSVERFAHREN**
CONTROLLED POWDER DEPOSIT WELDING METHOD
PROCÉDÉ RÉGULÉ DE SOUDAGE PAR APPLICATION DE POUDRE

(30) Priorität: 04.12.2018 DE 102018130798
(43) Veröffentlichungstag der Anmeldung: 13.10.2021
(73) Patentinhaber: TRUMPF Laser- und Systemtechnik SE, 71254 Ditzingen (DE)
(72) Erfinder: HESSE, Tim, 71254 Ditzingen (DE); OPITZ, Marco, 71229 Leonberg (DE); SAUTTER, Bjoern, 70437 Stuttgart (DE); SPEKER, Nicolai, 74385 Pleidelsheim (DE); STEEB, Timo, 71229 Leonberg (DE); WESSINGER, Benedikt, 75236 Kaempfelbach (DE)
(74) Vertreter: Trumpf Patentabteilung
(86) Internationale Anmeldenummer: PCT/EP2019/082552
(87) Internationale Veröffentlichungsnummer: WO 2020/114833

(56) Entgegenhaltungen:
- DE-A1- 102011 100 456
- US-A- 6 122 564
- US-A1- 2004 133 298
- US-A1- 2008 314 878
- US-A1- 2009 024 243
- US-A1- 2017 312 855
- US-B1- 6 925 346

## Beschreibung

Die Erfindung betrifft ein Laserauftragsschweißverfahren.

Das herkömmliche Laserauftragsschweißen ist aus dem Stand der Technik wohl bekannt (vgl. z.B. US 2017/0312855 A1). Dabei wird eine Oberfläche eines Bauteils mittels eines Laserstrahls aufgeschmolzen und dem dabei ausgebildeten Schmelzbad ein pulverförmiger Zusatzwerkstoff zugeführt. Das Pulver wird sodann im Schmelzbad ebenfalls aufgeschmolzen, so dass sich nach dem Erstarren des aufgeschmolzenen Pulvermaterials und der Oberfläche eine stoffschlüssig verbundene, insbesondere schmelzmetallurgisch verbundene, Materialschicht bildet. Dieser Vorgang kann je nach Anwendungsfall an verschiedenen Stellen der Oberfläche oder auch über einen größeren zusammenhängenden Bereich der Werkstückoberfläche durchgeführt werden, wodurch 3D-Formen mittels Laserauftragsschweißen aufgebracht werden können. Weiterhin können auch mehrere Materialschichten aus unterschiedlichen Materialien übereinander auf der Oberfläche aufgebaut werden. Für den Fall, dass metallisches Material aufgetragen wird, wird das Auftragsverfahren auch als "Laser Metal Deposition" (LMD) bezeichnet. Typische Anwendungsfelder für das Laserauftragsschweißen sind in dem Bereich der Reparatur-, Beschichtungs- und Verbindungstechniken zu finden.

Das sogenannte extreme Hochgeschwindigkeits-Laserauftragsschweißen (EHLA) ist aus der DE 10 2011 100 456 B4 vorbekannt. Gemäß diesem Verfahren wird eine deutliche Erhöhung der erzielbaren Bearbeitungsgeschwindigkeit im Vergleich zum herkömmlichen Laserauftragsschweißen dadurch erreicht, dass einem auf einer zu bearbeitenden Oberfläche vorliegenden Schmelzbad zumindest ein Zusatzwerkstoff in vollständig geschmolzener Form zugeführt wird. Hierzu wird der Zusatzwerkstoff, der zunächst insbesondere pulverförmig vorliegt, mittels eines Laserstrahls in einem Abstand größer als Null zum Schmelzbad geschmolzen und dem Schmelzbad dann in vollständig flüssiger Form zugeführt. Das Aufschmelzen des Zusatzwerkstoffs, insbesondere des Pulvers, in dem genannten Abstand vom Schmelzbad sowie das Erhitzen des Schmelzbads können dabei durch den gleichen Laserstrahl erfolgen. Der auf das Schmelzbad einstrahlende Laserstrahl bewirkt also auch das Schmelzen des Zusatzwerkstoffs im genannten Abstand vom Schmelzbad. Dies geschieht dadurch, dass das Schmelzbad und ein Fokus des Laserstrahls parallel zueinander relativ zur Oberfläche mit einer Geschwindigkeit von mindestens 20 m/min verschoben werden. Weiterhin kann im Falle eines pulverförmigen Zusatzwerkstoffs die Pulverdichte insbesondere so eingestellt werden, dass eine Laserleistung des Laserstrahls im Schmelzbad weniger als 60% der Laserleistung vor Kontakt des Laserstrahls mit dem Pulver beträgt. Zwar lässt sich mittels des EHLA-Verfahrens die Bearbeitungsgeschwindigkeit des Laserauftragsschweißvorgangs markant erhöhen. Allerdings hat es sich herausgestellt, dass zulässige Toleranzen, insbesondere eine homogene Schichtstärke, der durch das Laserauftragsschweißen aufgebrachten Beschichtung nicht zuverlässig sicherstellbar ist. Ausgewählte Maßnahmen zur Regulierung von Toleranzen wurden bisher nur im Zusammenhang mit dem herkömmlichen Laserauftragschweißen angewandt, wie **z.B.** in der US 6,925,346 B1 beschrieben.

Der Erfindung liegt die Aufgabe zugrunde, das EHLA-Verfahren weiterzubilden.

Diese Aufgabe wird durch ein Laserauftragsschweißverfahren mit den Merkmalen des Anspruchs 1 gelöst. Vorgeschlagen wird demnach ein Laserauftragsschweißverfahren, wobei auf einer Oberfläche zur Herstellung einer Beschichtungsschicht ein Schmelzbad umfassend zumindest einen geschmolzenen Zusatzwerkstoff mittels eines auf das Schmelzbad einstrahlenden Laserstrahls erzeugt wird. Dabei wird der Zusatzwerkstoff mittels des Laserstrahls in einem Abstand zum Schmelzbad geschmolzen, sodass der Zusatzwerkstoff dem Schmelzbad in vollständig geschmolzener Form zugeführt wird. Ferner wird der Einstrahlpunkt des Laserstrahls auf die Oberfläche entlang der Oberfläche mit einer Relativgeschwindigkeit von mindestens 20 m/min bewegt, wobei die Oberfläche zur Erzeugung der Relativgeschwindigkeit um eine Rotationsachse rotiert wird. Weiterhin wird zumindest zeitweise mittels einer Messeinrichtung eine Schichtdicke der hergestellten Beschichtungsschicht erfasst. Schließlich wird eine Aktion ausgelöst, wenn die erfasste Schichtdicke von einer Soll-Größe abweicht, wobei die Aktion darin liegt, einen Spurversatz des Laserstrahls relativ zur Oberfläche zu verändern.

Die Relativgeschwindigkeit ist folglich diejenige Geschwindigkeit, mit der sich die zu beschichtende Oberfläche relativ zum Einstrahlpunkt des Laserstrahls auf die Oberfläche bewegt. Der Laserstrahl strahlt dabei auf die Oberfläche so ein, dass ein Schmelzbad auf der Oberfläche entsteht. Man könnte folglich auch sagen, dass der Einstrahlpunkt und damit das Schmelzbad entlang der Oberfläche mit einer Geschwindigkeit von mindestens 20 m/min verlagert werden.

Zusätzlich zur Schichtdicke kann eine Oberflächeneigenschaft der hergestellten Beschichtungsschicht erfasst werden, wobei die Aktion auch ausgelöst werden kann, wenn die Oberflächeneigenschaft von einer Sollgröße für die Oberflächeneigenschaft abweicht.

Die Soll-Größe kann ein bestimmter Wert, beispielsweise eine Soll-Schichtdicke, sein. Denkbar wäre andererseits auch, dass die Soll-Größe ein Bereich, beispielsweise ein Toleranzbereich der Schichtdicke, ist.

Die Erfassung der Schichtdicke und/oder einer Oberflächeneigenschaft kann zeitweise mittels der Messeinrichtung erfolgen. Insbesondere kann die Erfassung allerdings während des gesamten Laserauftragsschweißvorgangs durchgeführt werden. Dadurch kann das Verfahren zuverlässig überwacht werden.

Bei der Oberflächeneigenschaft kann es sich insbesondere um die Rauigkeit, die Welligkeit und/oder das Vorhandensein und die Eigenschaften von Riefen und/oder Löchern handeln. Zusätzlich zur Schichtdicke kann folglich beispielsweise eine der vorgenannten Oberflächeneigenschaften erfasst werden.

Durch das Auslösen einer Aktion, wenn die erfasste Schichtdicke von einer Soll-Größe abweicht, kann insbesondere eine Beschichtungs-Herstellung innerhalb der zulässigen Toleranzen sichergestellt werden. Damit kann eine hinreichend hohe Qualität der Beschichtung trotz der hohen Bearbeitungsgeschwindigkeit beim EHLA-Verfahren erzielt werden.

Vorteilhafterweise liegt der Zusatzwerkstoff vor dem Aufschmelzen mittels des Laserstrahls als Pulver , als Draht, als Band, oder als Blechstreifen vor. Der feste Zusatzwerkstoff wird beim Auftreffen des Laserstrahls sodann aufgeschmolzen und in vollständig geschmolzener Form dem Schmelzbad zugeführt.

Eine vorteilhafte Ausgestaltung der Erfindung sieht vor, dass die Soll-Größe ein Toleranzbereich der Schichtdicke ist oder ein Bereich innerhalb des Toleranzbereichs der Schichtdicke ist, wobei die Aktion ausgelöst wird, wenn die erfasste Schichtdicke außerhalb der Soll-Größe liegt. Denkbar ist demnach, dass die mittels des Laserauftragsschweißvorgangs aufgebrachte Schichtdicke der Beschichtung innerhalb eines Toleranzbereichs liegen kann. Der Toleranzbereich kann folglich einen unteren Grenzwert und einen oberen Grenzwert umfassen. Die Soll-Größe kann andererseits auch innerhalb des Toleranzbereichs liegen, so dass der untere und obere Grenzwert noch innerhalb des Toleranzbereichs liegen. Dadurch kann insbesondere sichergestellt werden, dass die erzeugte Beschichtung nicht außerhalb der zulässigen Toleranzen liegt. Wird festgestellt, dass die hergestellte Schichtdicke unterhalb des Grenzwerts oder oberhalb des Grenzwerts liegt, so kann dementsprechend eine Aktion ausgelöst werden, um somit insbesondere eine Oberflächenbeschichtung zu erzielen, welche eine Schichtdicke innerhalb des Toleranzbereichs aufweist.

Wie oben erwähnt, wird die Oberfläche zur Erzeugung der Relativgeschwindigkeit um eine Rotationsachse rotiert. Die Oberfläche kann folglich eine Oberfläche eines rotatorisch bewegten Bauteils sein. Dabei kann die Oberfläche insbesondere rotationssymmetrisch ausgebildet sein. Denkbar ist insbesondere auch, dass das gesamte Bauteil rotationssymmetrisch ist. Dabei kann es sich bei dem Bauteil um eine Bremsscheibe, einen Kolben oder einen Zylinder handelt.

In diesem Zusammenhang ist vorgesehen, dass mittels des Laserauftragsschweißvorgangs spiralförmig die einzelnen Schichtbahnen von radial innen nach radial außen oder umgekehrt aufgebracht werden. Folglich wird das Bauteil mit der zu beschichtenden Oberfläche um eine Rotationsachse rotiert und der Laserstrahl Schritt für Schritt von radial außen nach radial innen oder umgekehrt bewegt, um somit auch das Schmelzbad spiralförmig von radial innen nach radial außen oder umgekehrt spiralförmig mit einer Geschwindigkeit von wenigstens 20 m/min zu verlagern. Eine Anpassung der Drehzahl der Oberfläche ist besonders einfach möglich, so dass eine Anpassung der Relativgeschwindigkeit der Bewegung der Oberfläche relativ zum Laserstrahl besonders einfach möglich ist. Dadurch können rotatorisch bewegte Bauteile besonders einfach und schnell beschichtet werden. Dennoch kann eine hinreichende Qualität der Beschichtung, insbesondere eine Schichtdicke innerhalb der zulässigen Toleranzen und gegebenenfalls mit einer ausreichend hohen Oberflächengüte, wie beispielsweise einer Rauigkeit innerhalb der zulässigen Toleranzen, bereitgestellt werden.

Durch die Veränderung des Spurversatzes des Laserstrahls wird die Lage des Laserstrahls relativ zur Oberfläche zu verändert. Diese Lageanpassung erfolgt zusätzlich zur vorgesehenen Relativbewegung zwischen dem Einstrahlpunkt des Laserstrahls und der Oberfläche. Die Vorrichtung zur Erzeugung einer Lageanpassung des Laserstrahls kann insbesondere an einem Linearantrieb angeordnet sein. Bei einem rotatorisch bewegten Bauteil zur Erzeugung der Relativbewegung kann folglich die Lage des Laserstrahls insbesondere von radial außen nach radial innen oder umgekehrt verändert werden. Dadurch, dass die Beschichtung bei dem rotatorisch bewegten Bauteil spiralförmig aufgebracht wird, werden durch die Veränderung des Spurversatzes des Laserstrahls die Windungsabstände verändert.

Vorzugsweise beträgt die Relativgeschwindigkeit 100 m/min bis 800 m/min, vorzugsweise 200 m/min bis 600 m/min, weiter vorzugsweise 200 m/min bis 450 m/min, und weiter vorzugsweise 300 m/min bis 400 m/min. Dadurch können besonders hohe Auftragsgeschwindigkeiten und damit Beschichtungsgeschwindigkeiten erzielt werden. Insbesondere kann das EHLA-Verfahren damit auch für eine Massenfertigung von Bauteilen verwendet werden. Beispielsweise können dadurch Bremsscheiben von Pkws, Lkws und Schienenfahrzeugen vergleichsweise wirtschaftlich beschichtet werden.

Eine besonders bevorzugte Weiterbildung der Erfindung ergibt sich daraus, dass die Messeinrichtung zur Erzeugung eines Lichtschnitts ausgebildet ist. Das Lichtschnittverfahren ist aus dem Stand der Technik bekannt. Hierbei handelt es sich um ein Verfahren der optischen 3D-Messtechnik, welches insbesondere die Vermessung eines Höhenprofils entlang einer projizierten Lichtlinie ermöglicht. Lichtschnitt-Scans sind beispielsweise mit 4 kHz möglich. Die Schichtdicke kann dabei insbesondere die Differenz zwischen einem unbeschichteten Teil der Oberfläche und dem gerade beschichteten Teil der Oberfläche sein. Werden mittels des EHLA-Verfahrens mehrere Schichten gleicher oder unterschiedlicher Materialen aufgebracht, so kann die Differenz auch die Differenz zwischen einer vorhergehenden Schicht und eines gerade hergestellten Teils der weiteren Schicht sein. Denkbar wäre auch, dass die Messeinrichtung zur Erzeugung einer Streifenprojektion ausgebildet ist.

Alternativ wäre auch denkbar, einen anderen optischen Sensor zur Erfassung der Schichtdicke und/oder einer Oberflächeneigenschaft zu verwenden. So wäre beispielsweise die Verwendung der optischen Kohärenztomographie (OCT), insbesondere der scannenden OCT, denkbar. Die Scanrate einer Linie mittels OCT liegt aktuell in der Größenordnung von 100 Hz.

Beschrieben hierin wird auch ein Bauteil umfassend eine beschichtete Oberfläche, welche mittels des erfindungsgemäßen Verfahrens herstellbar ist, wobei die beschichtete Oberfläche spiralförmig ausgebildet ist und veränderliche Windungsabstände aufweist. Durch die Verwendung des erfindungsgemäßen Verfahrens kann insbesondere eine Beschichtung mit einer Beschichtungsdicke innerhalb der zulässigen Toleranzen erzielt werden. Zusätzlich kann eine Beschichtung unter Einhaltung einer oder mehrerer gewünschter Oberflächeneigenschaften (Rauigkeit, Welligkeit, Riefen und/oder Löcher) erzielt werden.

Auf Grund der Rotationssymmetrie kann das Bauteil rotatorisch bewegt werden und damit besonders einfach und schnell beschichtet werden. Dabei kann das Bauteil beispielsweise als Bremsscheibe, Zylinder oder Kolben ausgebildet sein. Ferner ist denkbar, dass das gesamte Bauteil rotationssymmetrisch ist. Über die Drehzahl des Bauteils bei der rotatorischen Bewegung kann dabei insbesondere Einfluss auf die Schichtdicke genommen werden, so dass das EHLA-Verfahren insbesondere für eine Massenproduktion von beispielsweise Bremsscheiben für Lkws, Pkws oder Schienenfahrzeuge geeignet ist.

Beschrieben wird ferner eine Vorrichtung zur Ausführung des erfindungsgemäßen Verfahrens, umfassend eine Messeinrichtung zur Messung der Schichtdicke. Die Messeinrichtung kann dabei insbesondere einen optischen Sensor umfassen. Beispielsweise kann die Messeinrichtung zur Durchführung des LichtschnittVerfahrens ausgebildet sein. Denkbar wäre unter Umständen auch die Ausbildung zur Ausführung eines scannenden OCT-Verfahrens. Die Vorrichtung umfasst ferner eine Regelungseinrichtung, die dazu ausgebildet und eingerichtet ist, den Spurversatz des Laserstrahls relativ zu der zu beschichtenden Oberfläche zu ändern. Die Regelungseinrichtung kann dafür insbesondere zur Auswertung der von der Messeinrichtung erfassten Messdaten ausgebildet sein. Dadurch kann eine geregelte Beschichtung zur Erzielung bestimmter Beschichtungseigenschaften, insbesondere bestimmter Schichtdicken, erzielt werden.

Weitere Einzelheiten und vorteilhafte Ausgestaltungen der Erfindung sind der folgenden Beschreibung zu entnehmen, anhand derer die in den Figuren dargestellte Ausführungsform der Erfindung näher beschrieben und erläutert ist.

Es zeigen:
- Figur 1: eine schematisch gezeigte perspektivische Ansicht einer Vorrichtung zur Ausführung des Verfahrens gemäß einer Ausführungsform; und
- Figur 2: ein schematisch gezeigter Abschnitt der Oberfläche mit einer abschnittsweise aufgebrachten Beschichtung.

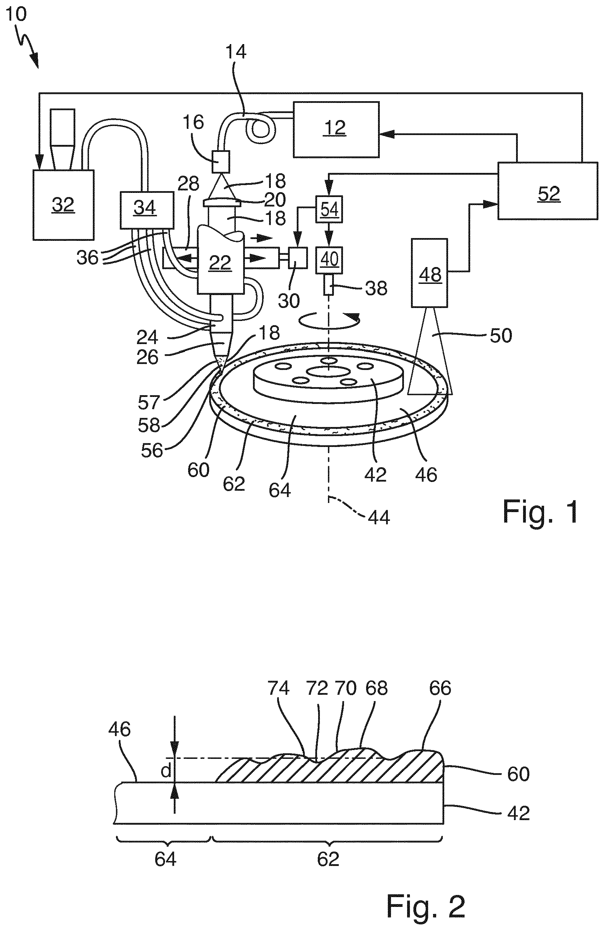

Figur 1 zeigt insgesamt eine Vorrichtung 10 zum Laserauftragsschweißen. Die Vorrichtung 10 umfasst einen Laser 12 zur Erzeugung eines Laserstrahls. Der erzeugte Laserstahl wird über ein Lichtwellenleiterkabel 14 einem Lichtaustritt 16 zugeführt. Der so erzeugte Laserstrahl 18 wird sodann in einer Kollimationslinse 20 parallel gerichtet. Daraufhin durchläuft der Laserstrahl 18 das Bauteil 22. Innerhalb dieses Bauteils 22 ist eine nicht gezeigte Fokussierlinse zur Bündelung des Laserstrahls angeordnet. Nach dem Passieren der Fokussierlinse durchläuft der Laserstrahl 18 einen zylindrischen Abschnitt 24 und einen trichterförmigen Abschnitt 26 des Bauteils 22. Die gesamte Baugruppe aus Lichtaustritt 16, Kollimationslinse 20, und Bauteil 22 ist mittels eines Linearantriebs 28 unter Verwendung eines elektrischen Motors 30 linear verlagerbar.

Die Vorrichtung 10 umfasst ferner einen Pulverförderer 32 zur Förderung von pulverförmigem Zusatzwerkstoff. Im Pulverförderer 32 wird das Pulver mit einem Gas, insbesondere einem Inertgas wie Stickstoff oder Argon, versetzt, um einen Pulvergasstrom 57 zur Förderung des Pulvers zu erzeugen. In einem Verteilerbauteil 34 wird der Pulvergasstrom 57 in mehrere, im vorliegenden Fall drei, Zuführschläuche 36 verteilt und sodann in den zylindrischen Abschnitt 24 eingeströmt. Die Abschnitte 24 und 26 des Bauteils 22 weisen dabei eine Doppelwandung auf, wobei der Laserstrahl 18 durch den dadurch erzielten Ringspalt hindurchgeführt ist, sodass der Pulvergasstrom 57 zwischen den beiden Wandungen hindurchströmt. Laserstrahl 18 und Pulvergasstrom 57 verlaufen folglich koaxial zueinander durch die Abschnitte 24 und 26. Im trichterförmigen Bauteil 26 verjüngt sich dabei der Ringspalt zwischen den beiden Wandungen, so dass der Pulvergasstrom 57 durch einen dadurch gebildeten düsenartigen Auslass das Bauteil 26 verlässt. Weiterhin umfasst die Vorrichtung 10 eine Rotationseinheit zur Lagerung und Rotation des Bauteils 42. Von dieser Rotationseinheit ist lediglich eine Rotationswelle 38 sowie ein Elektromotor 40 zum Antreiben der Rotationswelle 38 gezeigt. Im vorliegenden Fall wird dabei ein als Bremsscheibe ausgebildetes Bauteil 42 um die Rotationsachse 44 rotiert. Das Bauteil 42 umfasst eine zu beschichtende kreisringförmige Oberfläche 46. Das Bauteil 42 ist insgesamt rotationssymmetrisch ausgebildet.

Die Vorrichtung umfasst ferner eine Messeinrichtung 48. Diese ist zur Ausführung des Lichtschnittverfahrens eingerichtet, um so ein Höhenprofil von der Oberfläche 46 zu erzeugen. Dabei kann beispielsweise ein Lichtschnitt-Scan mit 4 kHz durchgeführt werden. Insbesondere kann dabei ein Höhenprofil entlang einer schematisch gezeigten projizierten Lichtlinie 50 erzeugt werden.

Schließlich umfasst die Vorrichtung eine Regelungseinrichtung 52. Diese dient zum einen zur Steuerung des Lasers 12 und des Pulverförderers 32. Ferner dient diese zur Ansteuerung einer ebenfalls zur Vorrichtung 10 gehörenden Steuereinheit 54, die zur Ansteuerung des Elektromotors 30 sowie des Elektromotors 40 ausgebildet ist. Ferner ist die Regelungseinrichtung 52 zur Auswertung der von der Messeinrichtung 48 erfassten Messsignale eingerichtet.

Insgesamt ist die Vorrichtung 10 zur Ausführung des im Folgenden dargelegten Verfahrens ausgebildet:
Die Oberfläche 46 wird mittels der Vorrichtung 10 durch extremes Hochgeschwindigkeits-Laserauftragsschweißen (EHLA) beschichtet. Hierzu wird das Bauteil 42 zunächst in Rotation versetzt, indem die Welle 38 vom Elektromotor 40 angetrieben wird.

Ferner wird der Laserstrahl 18 erzeugt und auf die Oberfläche 46 projiziert, wobei der Laserstrahl in einem Einstrahlpunkt 53 auf die Oberfläche 46 einstrahlt. Dadurch wird auf der Oberfläche 46 ein Schmelzbad 56 erzeugt. Weiterhin wird ein Pulvergasstrom 57 erzeugt. Nach dem Verlassen des zylindrischen Bauteils 26 treffen die Zusatzwerkstoff-Pulverpartikel 58 des Pulvergasstroms 57 während ihrer Flugphase dabei auf den Lichtpfad des Laserstrahls 18. Infolgedessen werden die Pulverpartikel 58 vollständig aufgeschmolzen und zwar bevor diese das Schmelzbad 56 erreichen. Somit wird der Zusatzwerkstoff dem Schmelzbad 56 in vollständig geschmolzener Form zugeführt. Dabei wird das Bauteil 42 derart schnell um die Rotationsachse 44 gedreht, dass der Einstrahlpunkt 53 des Laserstrahls 18 auf die Oberfläche 46 mit einer Geschwindigkeit von mindestens 20 m/min entlang der Oberfläche 46 verlagert wird. Dadurch wird das mittels des Laserstrahls 18 erzeugte Schmelzbad 56 um wenigstens 20 m/min entlang der Oberfläche 46 verlagert.

Durch den Laserauftragsschweißvorgang wird dabei nach und nach eine Beschichtung 60 erzeugt. Hierzu wird der Laserstrahl 18 mittels des Linearantriebs 28 Stück für Stück von radial außen nach radial innen relativ zur Rotationsachse 44 bewegt, sodass der Einstrahlpunkt 53 des Laserstrahls 18 in einer spiralförmigen Trajektorie entlang der Oberfläche 46 bewegt wird. Gleichermaßen wird folglich das Schmelzbad 56 in einer Spirale von radial außen nach radial innen zur Erzeugung der Beschichtung 60 geführt. Wie in den Figuren 1 und 2 ersichtlich ist, umfasst die Oberfläche 46 dabei einen beschichteten radial äußeren Abschnitt 62 und einen unbeschichteten radial inneren Abschnitt 64.

Wie anhand der Figuren 1 und 2 ersichtlich ist, kann mittels des Lichtschnittverfahrens die Schichtdicke d und/oder wenigstens eine Oberflächeneigenschaft der Oberfläche 66 der Beschichtung 60 ermittelt werden, und darauf basierend gegebenenfalls eine Aktion ausgelöst werden. Bei der Oberflächeneigenschaft kann es sich beispielsweise um die Rauigkeit, die Reliefstruktur, vorhandene Riefen, vorhandene Welligkeit und/oder vorhandene Löcher handeln.

Insbesondere kann allerdings ermittelt werden, ob die Beschichtung 60 eine Soll-Dicke d aufweist (vgl. Figur 2). Dabei werden während des gesamten Beschichtungsvorgangs kontinuierlich Lichtschnitte 50 erfasst. Wird dabei wie im Abschnitt 68 der Beschichtung 60 festgestellt, dass die Soll-Dicke d überschritten wird, so kann die Regelungseinrichtung 52 darauf basierend eine Aktion auslösen. Die Aktion kann beispielsweise darin liegen, die Steuereinrichtung 54, den Laser 12 und/oder den Pulverförderer 32 ansteuern, um die dazugehörigen Parameter so anzupassen, dass die Schichtdicke d verringert wird. Dabei kann zum einen in besonders einfacher Weise die Drehzahl der Welle 38 und damit des Bauteils 42 verändert werden. Ist die Schichtdicke, wie im Bereich 68 zu dick, kann insbesondere die Drehzahl erhöht werden, um die Schichtdicke wieder zu verringern. Zusätzlich oder alternativ kann die Laserleistung des Lasers 12 angepasst werden. Im Fall einer zu hohen Schichtdicke kann die Laserleistung insbesondere erhöht werden. Weiterhin kann der Pulvermassenstrom durch Ansteuerung des Pulverförderers 32 angepasst werden. Zusätzlich oder alternativ kann schließlich der Spurversatz bzw. die Verlagerungsgeschwindigkeit des Laserstrahls 18 durch entsprechende Ansteuerung des Linearantriebs 28 verändert werden. Insgesamt kann dadurch die Beschichtungserzeugung geregelt erfolgen. Basierend auf der erfassten Schichtdicke in Abschnitt 68 der Beschichtung 60 der Figur 2, steuert die Regelungseinrichtung 52 die relevanten Komponenten der Vorrichtung 10 folglich so an, dass die erzeugte Beschichtungsdicke reduziert wird, was anhand der Verringerung der Beschichtungsdicke in Abschnitt 70 ersichtlich ist. Wird die Beschichtungsdicke zu dünn (vgl. Abschnitt 72), so löst die Regelungseinrichtung entsprechende Steuersignale aus, um wiederum eine erhöhte Beschichtungsdicke zu erzielen (vgl. Abschnitt 74). Dieses Vorgehen findet insbesondere während des gesamten EHLA-Beschichtungsprozesses statt, sodass insgesamt eine Beschichtung mit vergleichsweise homogener Beschichtungsdicke um die Soll-Dicke d herum erzielt wird.

Die Erfindung ermöglicht insgesamt die geregelte Beschichtung eines Bauteils 42 mit einer Beschichtung 60 mittels des extremen Hochgeschwindigkeits-Laserauftragsschweißens. Aufgrund der Überwachung der Eigenschaften der Beschichtung 60, insbesondere der Schichtdicke **d,** und der darauf basierenden geregelten Parameteranpassung durch die Regelungseinrichtung 52, kann eine hinreichende Homogenität der Beschichtung 60, insbesondere eine Einhaltung der Toleranzen der Schichtdicke d der Beschichtung 60 erzielt werden. Zusätzlich oder alternativ kann die Oberflächengüte der Oberfläche 66 der Beschichtung 60 angepasst werden.

Insgesamt kann dabei die Wirtschaftlichkeit erhöht werden, indem das Laserauftragsschweißen mit markant erhöhter Bearbeitungsgeschwindigkeit verglichen mit dem herkömmlichen Laserauftragsschweißen durchführbar ist. Dennoch kann eine Überwachung und Qualitätssicherung der erzielten Schichtdicke d und/oder Oberflächeneigenschaften der Beschichtung 60 während des Herstellungsverfahrens ermöglicht werden.

## Patentansprüche

1. Laserauftragschweißverfahren, wobei auf einer Oberfläche (46) zur Herstellung einer Beschichtungsschicht (60) ein Schmelzbad (56) umfassend zumindest einen geschmolzenen Zusatzwerkstoff mittels eines auf das Schmelzbad (56) einstrahlenden Laserstrahls (18) erzeugt wird, wobei der Zusatzwerkstoff mittels des Laserstrahls (18) in einem Abstand zum Schmelzbad (56) geschmolzen wird, sodass der Zusatzwerkstoff dem Schmelzbad (56) in vollständig geschmolzener Form zugeführt wird, wobei der Einstrahlpunkt (53) des Laserstrahls (18) auf die Oberfläche (46) entlang der Oberfläche (46) mit einer Relativgeschwindigkeit von mindestens 20 m/min bewegt wird und wobei die Oberfläche (46) zur Erzeugung der Relativgeschwindigkeit um eine Rotationsachse (44) rotiert wird, **dadurch gekennzeichnet, dass** zumindest zeitweise mittels einer Messeinrichtung (48) eine Schichtdicke (d) der hergestellten Beschichtungsschicht (60) erfasst wird, wobei eine Aktion ausgelöst wird, wenn die erfasste Schichtdicke (d) von einer Soll-Größe abweicht und, wobei die Aktion darin liegt, einen Spurversatz des Laserstrahls (18) relativ zur Oberfläche (46) zu verändern.

2. Laserauftragschweißverfahren nach Anspruch 1, wobei der Zusatzwerkstoff vor dem Aufschmelzen mittels des Laserstrahls als Pulver (58), als Draht, als Band, oder als Blechstreifen vorliegt.

3. Laserauftragschweißverfahren nach Anspruch 1 oder 2, wobei die Soll-Größe ein Toleranzbereich der Schichtdicke (d) ist oder ein Bereich innerhalb des Toleranzbereichs der Schichtdicke (d) ist, und wobei die Aktion ausgelöst wird, wenn die erfasste Schichtdicke (d) außerhalb der Soll-Größe liegt.

4. Laserauftragschweißverfahren nach einem der vorhergehenden Ansprüche, wobei die Relativgeschwindigkeit 100 m/min bis 800 m/min, vorzugsweise 200 m/min bis 600 m/min, weiter vorzugsweise 200 m/min bis 450 m/min, und weiter vorzugsweise 300 m/min bis 400 m/min, beträgt.

5. Laserauftragschweißverfahren nach einem der vorhergehenden Ansprüche, wobei die Messeinrichtung (48) zur Erzeugung eines Lichtschnitts oder einer Streifenprojektion ausgebildet ist.

## Claims

1. A laser deposition welding method, wherein a molten pool (56) comprising at least one molten filler material is produced on a surface (46) for producing a coating layer (60) by means of a laser beam (18) radiating onto the molten pool (56), wherein the filler material is melted using the laser beam (18) at a distance from the molten pool (56), so that the filler material is supplied to the molten pool (56) in completely molten form, wherein the point of incidence (53) of the laser beam (18) on the surface (46) is moved along the surface (46) at a relative speed of at least 20 m/min and wherein the surface (46) is rotated about an axis of rotation (44) to generate the relative speed, **characterized in that** a layer thickness (d) of the coating layer (60) produced is detected at least intermittently by means of a measuring device (48), an action being triggered if the detected layer thickness (d) deviates from a desired value, and the action being related to change a track offset of the laser beam (18) relative to the surface (46).

2. The laser deposition welding method according to claim 1, wherein the filler material is present as powder (58), as a wire, as a strip or as a sheet metal strip before melting by the laser beam.

3. The laser deposition welding method according to claim 1 or 2, wherein the desired value is a tolerance range of the layer thickness (d) or is a range within the tolerance range of the layer thickness (d), and wherein the action is triggered when the detected layer thickness (d) is outside the desired value range.

4. The laser deposition welding method according to any one of the preceding claims, wherein the relative speed is 100 m/min to 800 m/min, preferably 200 m/min to 600 m/min, further preferably 200 m/min to 450 m/min, and further preferably 300 m/min to 400 m/min.

5. The laser deposition welding method according to any one of the preceding claims, wherein the measuring device (48) is designed to generate a light section or a strip projection.

## Revendications

1. Procédé de rechargement par soudage au laser, dans lequel un bain de fusion (56), comprenant au moins un matériau d'apport fondu, est généré sur une surface (46) pour la réalisation d'une couche de revêtement (60) au moyen d'un faisceau laser (18) irradiant le bain de fusion (56), dans lequel le matériau d'apport est fondu au moyen du faisceau laser (18) à une distance du bain de fusion (56), de sorte que le matériau d'apport est introduit dans le bain de fusion (56) sous forme entièrement fondue, dans lequel le point d'irradiation (53) du faisceau laser (18) sur la surface (46) est déplacé le long de la surface (46) à une vitesse relative d'au moins 20 m/min, et dans lequel la surface (46) est mise en rotation autour d'un axe de rotation (44) pour générer la vitesse relative, **caractérisé en ce qu'au** moins temporairement, une épaisseur de couche (d) de la couche de revêtement (60) réalisée est détectée au moyen d'un dispositif de mesure (48), dans lequel une action est déclenchée lorsque l'épaisseur de couche (d) détectée s'écarte d'une valeur cible, et dans lequel l'action consiste à modifier un décalage de trajectoire du faisceau laser (18) par rapport à la surface (46).

2. Procédé de rechargement par soudage au laser selon la revendication 1, dans lequel le matériau d'apport se présente sous forme de poudre (58), de fil, de bande ou de bandelette métallique avant la fusion au moyen du faisceau laser.

3. Procédé de rechargement par soudage au laser selon la revendication 1 ou 2, dans lequel la valeur cible est une plage de tolérance de l'épaisseur de couche (d) ou une plage située à l'intérieur de la plage de tolérance de l'épaisseur de couche (d), et dans lequel l'action est déclenchée lorsque l'épaisseur de couche (d) détectée se trouve en dehors de la valeur cible.

4. Procédé de rechargement par soudage au laser selon l'une quelconque des revendications précédentes, dans lequel la vitesse relative est comprise entre 100 m/min et 800 m/min, de préférence entre 200 m/min et 600 m/min, plus préférentiellement entre 200 m/min et 450 m/min, et encore plus préférentiellement entre 300 m/min et 400 m/min.

5. Procédé de rechargement par soudage au laser selon l'une quelconque des revendications précédentes, dans lequel le dispositif de mesure (48) est conçu pour générer une coupe optique ou une projection de franges.
